# FASCICULE DE BREVET EUROPEEN

(11) **EP 3 426 522 B1**
(45) Date de publication et mention de la délivrance du brevet: **01.04.2020**
(21) Numéro de dépôt: 17709134.5
(22) Date de dépôt: 09.02.2017
(51) Int. Cl.: B60R 1/06

(54) **EMBASE DE RETROVISEUR EXTÉRIEUR DE VÉHICULE AUTOMOBILE AVEC CROCHET DE FIXATION PROVISOIRE**
SOCKEL FÜR KRAFTFAHRZEUGSEITENSPIEGEL MIT EINEM HAKEN ZUR VORÜBERGEHENDEN BEFESTIGUNG
BASEPLATE OF AN AUTOMOBILE EXTERIOR MIRROR WITH A PROVISIONAL FIXATION HOOK

(30) Priorité: 07.03.2016 FR 1651870
(43) Date de publication de la demande: 16.01.2019
(73) Titulaire: PSA Automobiles SA, 78300 Poissy (FR)
(72) Inventeur: FIGENT, Michel, 25260 LONGEVELLE SUR DOUBS (FR)
(86) Numéro de dépôt international: PCT/FR2017/050296
(87) Numéro de publication internationale: WO 2017/153649

(56) Documents cités:
- EP-A2- 1 864 860
- DE-A1-102010 061 112
- FR-A1- 2 975 352
- JP-A- S59 220 429
- US-A- 6 039 449
- US-A1- 2005 083 596
- US-A1- 2012 235 009

## Description

L'invention a trait au domaine des rétroviseurs extérieurs de véhicule automobile. Plus particulièrement, l'invention a trait aux moyens de fixation d'un rétroviseur extérieur à une porte de véhicule automobile.

Un véhicule automobile comprend généralement des rétroviseurs extérieurs montés sur la carrosserie. Sur un véhicule comprenant des portes latérales, les rétroviseurs sont généralement montés sur les portes latérales. Le montage d'un rétroviseur sur une porte latérale est généralement réalisé manuellement par un monteur sur une ligne d'assemblage. Un rétroviseur comprend généralement une embase de montage sur laquelle est disposé un miroir. Le montage du rétroviseur requiert le placement de l'embase à une position précise, sa fixation et éventuellement un ajustement final selon le mode de réalisation du rétroviseur. L'intervention du monteur pour la fixation du rétroviseur sur la porte sur une ligne d'assemblage par ailleurs largement automatisée est un coût supplémentaire dans le prix de revient du véhicule et un montage laborieux est un frein à la productivité.

Le document JPS59220429 décrit les moyens de fixation d'une embase de rétroviseur extérieur, selon le préambule de la revendication 1.

Le document de brevet EP 1 864 860 B1 divulgue une embase de rétroviseur extérieur pour une porte de véhicule automobile, comprenant une portion de fixation contre une platine généralement verticale de la porte, des moyens de fixation provisoire de la portion de fixation sur la porte, comprenant des premiers moyens de fixation situés à une zone supérieure de l'embase. Ces premiers moyens de fixation permettent d'ancrer l'embase sur la porte à une position approximative à partir de laquelle le monteur par pivotement de l'embase peut engager des deuxièmes moyens de fixation à une zone inférieure de l'embase en vue de positionner l'embase dans sa position de fixation à la porte. Cet enseignement est intéressant en ce que les moyens de fixation provisoire offrent un ancrage de l'embase sur la porte. Les deuxièmes moyens sont du type à ajustement serré et requièrent par conséquent une certaine précision. Aussi, ces moyens requièrent l'exercice d'un effort essentiellement horizontal dont le dosage peut s'avérer difficile, notamment en raison de l'absence d'un ressenti net d'arrivée en butée.

L'invention a pour objectif de proposer une solution palliant au moins un inconvénient de l'état de la technique, en particulier de l'état de la technique ci-dessus mentionné. Plus particulièrement, l'invention a pour objectif de proposer une solution pour faciliter le montage d'une embase de rétroviseur extérieur à une porte de véhicule automobile et pour une fabrication plus économique.

L'invention a pour objet une embase de rétroviseur extérieur pour une porte de véhicule automobile, comprenant une portion de fixation contre une platine généralement verticale de la porte ; des moyens de fixation provisoire de la portion de fixation sur la porte, comprenant des premiers moyens de fixation provisoire situés à une zone supérieure de ladite embase ; remarquable en ce que les moyens de fixation provisoire comprennent, en outre, au moins un crochet situé à un bord inférieur de ladite embase et dirigé vers le bas de manière à pouvoir engager avec un bord supérieur d'un panneau extérieur de la porte, par un mouvement d'engagement des premiers moyens suivi d'un mouvement de pivotement de l'embase en vue d'engager ledit crochet.

Les moyens de fixation provisoire sont configurés pour présenter la portion de fixation dans une position prédéterminée vis-à-vis de la platine en vue de sa fixation finale.

Selon l'invention, le ou au moins un des crochets est déformable élastiquement.

Avantageusement, le crochet présente une surface d'engagement inclinée apte à glisser contre le bord supérieur du panneau extérieur de sorte à déplacer ledit crochet verticalement avant de passer outre ledit bord pour positionner ledit crochet autour dudit bord supérieur.

Selon un mode avantageux de l'invention, les premiers moyens de fixation provisoire sont configurés pour coopérer avec un montant supérieur de cadre de la porte, Selon un mode avantageux de l'invention, les premiers moyens de fixation provisoire forment une patte apte à s'étendre longitudinalement le long du bord supérieur de la portion de fixation.

Selon un mode avantageux de l'invention, l'embase comprend un corps s'étendant dans la portion de fixation avec des moyens de fixation finale, notamment par vissage, le ou les crochets étant venus de matière avec ledit corps.

Avantageusement, le corps est en plastique, préférentiellement chargé de fibre de verre.

Selon un mode avantageux de l'invention, l'embase comprend un cache recouvrant le corps au moins sur la portion de fixation, les premiers moyens de fixation provisoire étant venus de matière avec ledit cache.

Selon un mode avantageux de l'invention, l'embase comprend une portion de support du rétroviseur, ladite portion s'étendant essentiellement transversalement depuis la portion de fixation, préférentiellement depuis une zone inférieure de la dite portion de fixation.

L'invention a également pour objet une porte de véhicule automobile, comprenant : un panneau extérieur avec un bord supérieur ; un cadre supérieur de vitre avec, à une zone avant dudit cadre, une platine de fixation ; une embase de rétroviseur extérieur, fixée à la platine de fixation ; remarquable en ce que l'embase de rétroviseur est conforme à l'invention, le ou les crochets épousant le bord supérieur.

Selon un mode avantageux de l'invention, le ou les crochets sont à distance du bord supérieur lorsque la portion de fixation de l'embase est fixée de manière finale à la platine de fixation.

Selon un mode avantageux de l'invention, la portion de fixation comprend des fûts de réception de vis de fixation traversant la platine de fixation.

Avantageusement, la platine de fixation est comprise dans une doublure intérieure de la porte.

Avantageusement, le crochet coopère avec le bord supérieur du panneau extérieur de sorte à ce que la portion de fixation se présente contre la doublure intérieure de la porte.

Avantageusement, les fûts de réception de vis et le crochet sont situés à une zone arrière de la portion de fixation de l'embase en position normale de l'embase du véhicule.

Les mesures de l'invention sont intéressantes en ce que l'embase de rétroviseur conforme à l'invention facilite le montage de l'embase. En effet, les premiers et deuxième moyens de fixation provisoire de l'embase sont configurés pour un maintien de l'embase en vue de la fixation finale ou définitive ce qui facilite l'opération de fixation finale. Les moyens de fixation provisoire permettent de présenter la portion de fixation dans une position prédéterminée vis-à-vis de la platine. Le crochet facilite le maintien vertical de l'embase et évite un écartement vers l'extérieur de la porte de l'embase lors de la fixation finale, en particulier l'engagement des vis de fixation. Le montage de l'embase de rétroviseur est ainsi rapidement exécuté ce qui réalise une économie dans le coût de fabrication du véhicule.

D'autres caractéristiques et avantages de la présente invention seront mieux compris à l'aide de la description et des dessins parmi lesquels :
- La figure 1 est une vue d'une porte de véhicule automobile comprenant un rétroviseur conforme à l'invention ;
- La figure 2 est une section transversale de la porte de la figure 1, la section passant par le rétroviseur ;
- La figure 3 est une vue en perspective d'une embase de rétroviseur conforme à l'invention ;

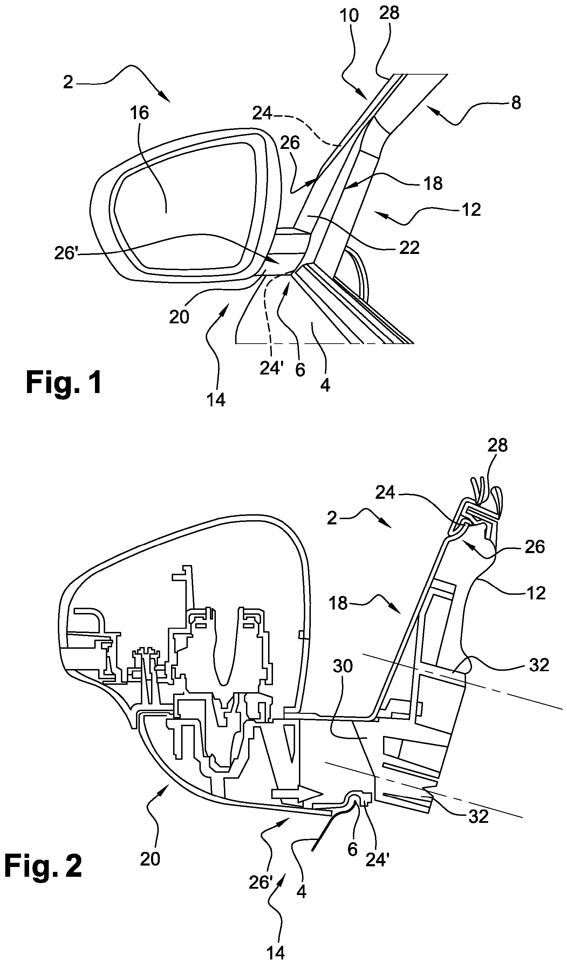

La figure 1 est une vue d'une porte 2 de véhicule automobile conforme à l'invention. La porte de véhicule automobile comprend un panneau extérieur 4 avec un bord supérieur 6, un cadre supérieur 8 de vitre avec, à une zone avant 10 du cadre, une platine 12 de fixation. La porte 2 comprend aussi une embase 14 de rétroviseur extérieur 16 conforme à l'invention et fixée à la platine de fixation. L'embase comprend une portion de fixation 18 à la platine et une portion de support 20 du rétroviseur 16, cette dernière s'étendant essentiellement transversalement depuis la portion de fixation. L'embase 14 comprend un corps (non visible) et un cache 22 qui recouvre le corps. Le corps comprend des moyens de fixation finale (non visible à la figure 1) à la platine, en l'occurrence par vissage, et le cache recouvre le corps. Le cache 22 recouvre en l'occurrence le corps dans sa totalité, ceci explique qu'on ne voit pas le corps sur cette image, il est cependant recherché grâce au cache, à cacher le corps au moins sur la portion de fixation. L'embase 14 comprend aussi des moyens de fixation provisoire (non visibles à la figure 1) de l'embase à la porte. Des premiers moyens 24 de fixation provisoire sont situés à une zone supérieure 26 de l'embase 14. Les moyens de fixation provisoire comprennent, en outre, un ou plusieurs crochets 24' qui sont situés à un bord inférieur de l'embase. Les premiers moyens 24, qui sont venus de matière avec le cache 22 dans le mode de réalisation de l'invention ici présenté, sont configurés pour coopérer avec un montant supérieur 28 du cadre 8 de la porte 2. Le crochet 24' sur le bord inférieur 26' de l'embase 14, et qui est venu de matière avec le corps (non visible) dans le mode de réalisation de l'invention ici présenté, est dirigé vers le bas de manière à engager avec le bord supérieur 6 du panneau extérieur 4 de la porte. Le montage de l'embase 14 sur la porte est effectué par un mouvement d'engagement des premiers moyens 24 avec le montant supérieur 28 du cadre 8 de la porte, premier mouvement qui est suivi d'un deuxième mouvement de pivotement de l'embase pour l'engagement du crochet 24' avec le bord supérieur 6 du panneau extérieur 4.

La figure 2 est une section transversale de la porte 2 de véhicule automobile conforme à l'invention au niveau de l'embase 14 de rétroviseur extérieur. On peut voir sur la droite de l'image le panneau extérieur 4 de la porte avec son bord supérieur 6, puis plus haut la platine 12 de fixation de l'embase de rétroviseur qui en l'occurrence est comprise dans une doublure de la porte, puis plus haut encore le montant supérieur 28 du cadre de la porte comme introduit en référence avec la figure 1. On peut voir sur la gauche de l'image l'embase 14 de rétroviseur extérieur avec la portion de fixation 18 sur l'embase qui est vers la droite et la portion de support 20 du rétroviseur vers la gauche et qui s'étend transversalement vers l'extérieur depuis la portion de fixation. En l'occurrence, on peut noter que la portion de support du rétroviseur s'étend depuis une zone inférieure de la portion de fixation.

On va s'attacher dans le paragraphe suivant à décrire la structure de l'embase 14 avec les moyens de fixation finale ainsi que les moyens de fixation provisoire de l'embase.

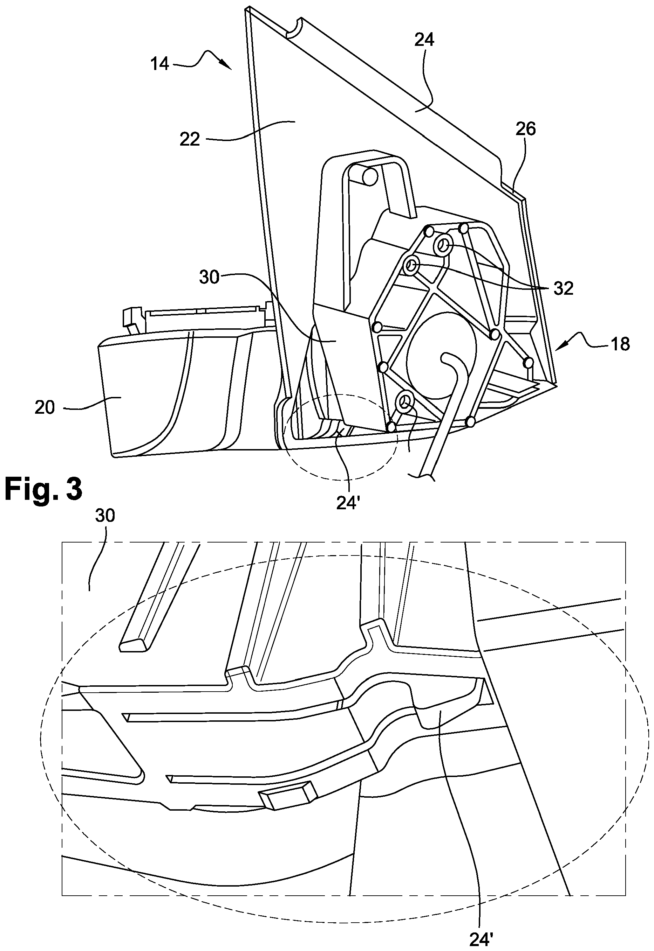

La structure de l'embase est bien visible à la figure 2 : On peut voir aisément, le corps 30 qui s'étend dans la portion de fixation 18 de l'embase 14 et qui comprend les moyens de fixation finale 32 à la platine 12. On peut observer en l'occurrence les fûts 32 de réception de vis de fixation de la portion de fixation 18 qui sont compris dans le corps 30. Les vis de fixation (non représentées) sont destinées à traverser la platine 12 par des orifices de fixation et se loger dans les fûts de fixation 30 de la portion de fixation de l'embase. Les axes de vis sont représentés schématiquement par des traits d'axe sur la figure. On comprend bien la problématique que peut rencontrer le monteur au montage en l'absence de l'invention : Il est sensé, d'une main, mettre en position de fixation l'embase 14 contre la platine 12 de fixation, et de l'autre main, manipuler des vis plus un outil pour tourner les vis dans les fûts de fixation 32. Les moyens de fixation provisoire sont aussi bien visibles sur cette image : on peut voir les premiers moyens de fixation provisoire situés sur la zone supérieure de l'embase. Dans le mode de réalisation ici présenté, les premiers moyens de fixation provisoire comprennent une patte 24 au niveau du bord supérieur 26 de la portion de fixation. La patte de fixation provisoire vient en l'occurrence s'insérer sous un joint formé par le montant supérieur 28 de cadre de la porte. On peut voir le crochet 24' situé sur le bord inférieur 26' de l'embase 14, le crochet est dirigé vers le bas et engagé avec le bord supérieur 6 du panneau extérieur 4. Les moyens de fixation provisoire dans le mode de réalisation ici présenté, consistant en la patte 24 et le crochet 24', sont réalisés pour présenter la portion de fixation dans une position prédéterminée vis-à-vis de la platine. On va s'attacher dans le paragraphe suivant à décrire un mode de réalisation particulier préféré du crochet 24' de fixation provisoire qui est par ailleurs repris à la figure 3.

Le crochet 24' est déformable élastiquement. Il peut consister en une lamelle déformable élastiquement qui s'étend dans la direction de rapprochement du crochet vers le panneau extérieur lors du mouvement de pivotement de l'embase au montage. La direction de rapprochement est une direction principalement horizontale sur l'image, elle correspond à la direction transversale de l'embase. Une flèche horizontale qui est orientée vers la droite sur la figure indique la direction de rapprochement du crochet. La forme concave de crochet est à une extrémité libre d'engagement de la lamelle déformable élastiquement avec le bord supérieur du panneau extérieur.

Avantageusement, le crochet déformable élastiquement présente une surface d'engagement inclinée par rapport à la direction de rapprochement et qui est apte à glisser contre le bord supérieur 6 du panneau extérieur 4 lors du rapprochement, de sorte à déplacer verticalement l'extrémité de forme concave du crochet, avant de passer outre ledit bord pour positionner ladite forme concave du crochet autour du bord supérieur du panneau extérieur. Cette mesure de l'invention est très intéressante en ce que le crochet déformable élastiquement est de principe de fonctionnement simple.

On va s'attacher dans le paragraphe suivant à décrire le maintien de l'embase 14 sur la porte 2 que peuvent assurer les moyens de fixation provisoire 24 et 24' en vue d'une fixation rapide.

Le crochet 24' est situé sur l'embase 14 de sorte à ce que la portion de fixation 18 de l'embase puisse, une fois le crochet en position autour du bord supérieur, se présenter dans la position transversale adéquate en vis-à-vis de la platine 12 de fixation en vue de la fixation finale. Il est à noter que le crochet orienté vers le bas participe, au moment de la fixation provisoire, au soutien de l'embase dans la direction verticale. On verra en référence avec la figure 3, comment l'architecture du corps de l'embase peut participer de manière complémentaire au maintien vertical de l'embase sur le bord supérieur du panneau extérieur de la porte. On verra aussi en référence avec la figure 3 comment les premiers moyens de fixation provisoire 24 permettent par ailleurs un maintien longitudinal de l'embase.

On va s'attacher dans le paragraphe suivant à décrire une fonction du crochet 24' en termes de maintien dans la direction transversale lors la fixation finale de l'embase.

A un effort dirigé vers la gauche sur la figure 2, qui est exercé sur l'embase lors de l'insertion des vis de fixation dans les fûts de fixation 32, s'oppose un effort dirigé vers la droite sur la figure, qui est celui exercé par le bord supérieur 6 du panneau extérieur dans la forme concave du crochet 24'. Une fois l'embase fixée provisoirement sur la porte, il n'est donc pas nécessaire au monteur de maintenir l'embase du côté extérieur de la porte lors du logement des vis de fixation, de l'intérieur, dans les fûts à travers la platine de fixation. Ce maintien provisoire est très avantageux pour réduire le temps de fixation de l'embase. Il est à noter que le corps peut être en un matériau sensiblement raide. A titre d'exemple, le corps peut être en plastique avec un renfort de fibres de verre. Le crochet étant en l'occurrence venu de matière avec le corps, l'effort du bord supérieur 6 du panneau extérieur 4 sur le crochet 24' lors de la mise en place des vis peut se faire avec une déformation transversale sensiblement faible, tout du moins quasi négligeable dans le contexte de fixation de l'embase ce qui est avantageux pour le maintien en position de la portion de fixation de l'embase 14 vis-à-vis de la platine de fixation. Dans un mode de réalisation de l'invention (non représenté), le crochet peut épouser le bord supérieur du panneau extérieur une fois engagé.

On va s'attacher dans le paragraphe suivant à décrire la disposition finale de l'embase 14 sur la porte une fois réalisée la fixation finale.

L'embase ici présentée sur la figure 2 est en position finale une fois définitivement fixée à la porte. On peut observer que l'embase 14 ne repose pas, via le crochet 24', contre le bord supérieur 6 du panneau extérieur 4, alors que les premiers moyens de fixation provisoire 24 restent bien engagés avec le montant supérieur 28 du cadre de porte 2. Le crochet 24' est bien à distance du bord supérieur 6 lorsque la portion de fixation de l'embase est fixée de manière finale à la platine de fixation. Cette mesure de l'invention est intéressante en ce qu'elle peut éviter un hyperstatisme dans la fixation de l'embase.

La figure 3 est une vue en perspective d'une embase 14 de rétroviseur conforme à l'invention. L'image principale de la figure (en haut) est une vue de l'embase prise de de trois-quarts arrière de l'intérieur du véhicule. L'image secondaire de la figure (en bas) est une vue agrandie de dessous du crochet 24' de l'embase. On peut voir du premier au dernier plan de l'image principale, les fûts 32 de réception de vis de la portion de fixation 18 de l'embase, le corps 30 avec le crochet 24', puis le cache 22 du corps de la portion de fixation de l'embase, et enfin en arrière la portion de soutien 20 du rétroviseur.

On va s'attacher dans le paragraphe suivant à compléter la description des premiers moyens de fixation provisoire 24.

On a pu voir en référence avec les figures 1 et 2 les premiers moyens de fixation provisoire configurés pour coopérer avec le montant supérieur de cadre de la porte, et en particulier formant une patte apte à s'insérer en arrière d'un joint sur le cadre.

On peut voir ici la patte 24 venu de matière avec le cache 22 du corps de la portion de fixation de l'embase et qui s'étend longitudinalement le long du bord supérieur 26 de la portion de fixation 18. La patte 24 est en l'occurrence inclinée vers le bas en s'étendant vers l'avant (vers la droite sur l'image) en position normale de l'embase sur le véhicule de sorte à longer le cadre supérieur de vitre qui s'incline également. On peut par ailleurs observer le bord avant de l'embase. La patte de fixation provisoire 24 est apte à coopérer avec le cadre supérieur de vitre au niveau de la zone avant dudit cadre sur laquelle est située la platine. On peut observer que le bord avant est situé à petite distance de la patte en comparaison du volume de l'embase ; il est donc sensiblement aisé de positionner la patte de fixation provisoire sur le cadre à la position longitudinale souhaitée en visualisant, par exemple, la position du bord avant de l'embase avec le cadre de vitre, en particulier avec l'extrémité avant dudit cadre. Le premier moyen de fixation provisoire 24 participe ainsi au positionnement longitudinal recherché de la portion de fixation 18 par rapport à la platine de fixation.

On va s'attacher dans le paragraphe suivant à compléter la description de l'embase 14 en ce qui concerne la situation du crochet 24' sur l'embase par rapport aux fûts de réception de vis.

On peut voir dans le mode de réalisation de l'embase ici présenté, que les moyens de fixation provisoires comprennent un unique crochet 24'. Il est à noter que les fûts 32 de réception de vis et le crochet 24' sont situés à une zone arrière (vers la gauche sur l'image) de la portion de fixation 18 de l'embase en position normale de l'embase du véhicule. Il est recherché en effet que le crochet 24' et les fûts 32 soient situés sensiblement à un même niveau selon la direction longitudinale. Cette mesure de l'invention est avantageuse pour assurer la stabilité de l'embase lors de l'engagement des vis dans les fûts, et l'effort transversal vers l'extérieur sur l'embase associé et repris par le crochet.

On va s'attacher dans le paragraphe suivant à décrire le corps 30 de l'embase au niveau du crochet 24' apte à engager avec le bord supérieur du panneau extérieur de la porte du véhicule automobile.

On peut voir sur l'image agrandie de la figure 3, le crochet 24' de l'embase qui en l'occurrence est venu de matière avec le corps 30 en plastique de l'embase. Le crochet est en forme de lamelle déformable élastiquement comme introduit en référence avec la figure 2. La lamelle s'étend transversalement de sa partie fixée au corps à gauche de l'image vers sa partie libre à droite de l'image. On peut aisément observer la surface d'engagement inclinée apte à prendre appui sur le bord supérieur du panneau extérieur lors du rapprochement horizontal de l'embase vers le panneau en fin de pivotement, de sorte à se déplacer verticalement et passer outre ledit bord, ce dernier pouvant se loger dans la forme concave en crochet en arrière de la surface inclinée. On peut observer que le corps est nervuré avec une ouverture s'étendant dans la direction de rapprochement et située sur la face inférieure de l'embase. La lamelle déformable élastiquement est liée au bord de l'ouverture à une extrémité opposée à la forme en crochet et s'étend à niveau de l'ouverture jusqu'au bord opposé de l'ouverture. On peut remarquer la surface d'engagement inclinée qui est en saillie de l'ouverture en vue de pouvoir coopérer avec le bord supérieur du panneau extérieur de la porte. Le corps et la lamelle déformable élastiquement sont en l'occurrence obtenus par moulage de matière plastique. On peut par ailleurs observer que la paroi extérieure du corps au niveau de sa face inférieure, présente un profil en forme de gorge au niveau de la forme en crochet dans la direction verticale quand l'embase est en position normale sur le véhicule. De manière avantageuse, la gorge du corps de l'embase participe au soutien vertical de l'embase lors de sa fixation provisoire. Cette mesure ne limite cependant pas l'invention.

On va s'attacher dans le paragraphe suivant à décrire une méthode de démontage de l'embase 14 du véhicule qui est favorablement avantagée par l'invention.

Lors d'un démontage de l'embase, une fois les vis de fixation retirées, le monteur peut exercer par le dessous un effort vertical orienté vers le haut sur le crochet 24' de manière à pouvoir le dégager du bord supérieur de la paroi extérieure de la porte, en vue de faire pivoter l'embase dans le sens inverse de celui du montage vu en référence avec la figure 2. La réalisation des moyens de fixation provisoire permet ainsi un démontage non destructeur de l'embase.

## Revendications

1. Embase (14) de rétroviseur extérieur (16) pour une porte (2) de véhicule automobile, comprenant
- une portion de fixation (18) contre une platine (12) généralement verticale de la porte ;
- des moyens de fixation provisoire de la portion de fixation (18) sur la porte, comprenant des premiers moyens (24) de fixation provisoire situés à une zone supérieure (26) de ladite embase ;
**caractérisé en ce que** les moyens de fixation provisoire comprennent en outre, au moins un crochet (24') déformable élastiquement situé à un bord inférieur (26') de ladite embase et dirigé vers le bas de manière à pouvoir engager avec un bord supérieur (6) d'un panneau extérieur (4) de la porte (2), par un mouvement d'engagement des premiers moyens (24) suivi d'un mouvement de pivotement de l'embase (14) en vue d'engager ledit crochet.

2. Embase (14) selon l'une des revendications 1, **caractérisée en ce que** les premiers moyens de fixation provisoire (24) sont configurés pour coopérer avec un montant supérieur (28) de cadre (8) de la porte,

3. Embase (14) selon la revendication 2, **caractérisée en ce que** les premiers moyens de fixation provisoire forment une patte (24) s'étendant longitudinalement le long du bord supérieur (26) de la portion de fixation (18).

4. Embase (14) selon l'une des revendications 1 à 3 , **caractérisée en ce que** l'embase comprend un corps (30) s'étendant dans la portion de fixation (18) avec des moyens de fixation finale (32), notamment par vissage, le ou les crochets (24') étant venus de matière avec ledit corps (30).

5. Embase (14) selon la revendication 4 , **caractérisée en ce qu'**elle comprend un cache (22) recouvrant le corps (30) au moins sur la portion de fixation (18), les premiers moyens de fixation provisoire (24) étant venus de matière avec ledit cache.

6. Embase (14) selon l'une des revendications 1 à 5, **caractérisée en ce qu'**elle comprend une portion de support (20) du rétroviseur, ladite portion s'étendant essentiellement transversalement depuis la portion de fixation (18), préférentiellement depuis une zone inférieure de la dite portion de fixation.

7. Porte (2) de véhicule automobile, comprenant :
- un panneau extérieur (4) avec un bord supérieur (6) ;
- un cadre (8) supérieur de vitre avec, à une zone avant (10) dudit cadre, une platine (12) de fixation ;
- une embase (14) de rétroviseur extérieur, fixée à la platine (12) de fixation ; **caractérisé en ce que**
l'embase (14) de rétroviseur est selon l'une des revendications 1 à 6, le ou les crochets (24') épousant le bord supérieur (6).

8. Porte (2) selon la revendication 7, **caractérisée en ce que** le ou les crochets (24') sont à distance du bord supérieur (6) lorsque la portion de fixation (18) de l'embase est fixée de manière finale à la platine (12) de fixation.

9. Porte (2) selon la revendication 8, **caractérisée en ce que** la portion de fixation (18) comprend des fûts de réception (32) de vis de fixation traversant la platine (12) de fixation.

## Patentansprüche

1. Sockel (14) eines Außenrückspiegels (16) für eine Kraftfahrzeugtür (2), der Folgendes umfasst:
- einen Befestigungsabschnitt (18) gegen eine Platte (12), die im Allgemeinen vertikal ist, der Tür;
- Mittel zur vorübergehenden Befestigung des Befestigungsabschnitts (18) auf der Tür, die erste Mittel (24) zum vorübergehenden Befestigen umfasst, die sich in einer oberen Zone (26) des Sockels befinden;
**dadurch gekennzeichnet, dass** die Mittel zur vorübergehenden Befestigung außerdem mindestens einen elastisch verformbaren Haken (24') umfassen, der an einem unteren Rand (26') des Sockels liegt und derart nach unten gerichtet ist, dass er mit einem oberen Rand (6) einer Außenplatte (4) der Tür (2) durch eine Eingriffsbewegung der ersten Mittel (24), gefolgt von einer Schwenkbewegung des Sockels (14) zum Einrücken des Hakens eingreifen kann.

2. Sockel (14) nach Anspruch 1, **dadurch gekennzeichnet, dass** die ersten Mittel zur vorübergehenden Befestigung (24) konfiguriert sind, um mit einem oberen Ständer (28) des Rahmens (8) der Tür zusammenzuwirken.

3. Sockel (14) nach Anspruch 2, **dadurch gekennzeichnet, dass** die ersten Mittel zur vorübergehenden Befestigung eine Pratze (24) bilden, die sich längs entlang des oberen Rands (26) des Befestigungsabschnitts (18) erstreckt.

4. Sockel (14) nach einem der Ansprüche 1 bis 3, **dadurch gekennzeichnet, dass** der Sockel einen Körper (30) umfasst, der sich in dem Befestigungsabschnitt (18) mit Mitteln zum endgültigen Befestigen (32), insbesondere durch Schrauben, erstreckt, wobei der oder die Haken (24') aus einem Stück mit dem Körper (30) besteht (bestehen).

5. Sockel (14) nach Anspruch 4, **dadurch gekennzeichnet, dass** er eine Abdeckung (22) umfasst, die den Körper (30) mindestens auf dem Befestigungsabschnitt (18) abdeckt, wobei die ersten Mittel zur vorübergehenden Befestigung (24) aus einem Stück mit der Abdeckung bestehen.

6. Sockel (14) nach einem der Ansprüche 1 bis 5, **dadurch gekennzeichnet, dass** er einen Stützabschnitt (20) des Rückspiegels umfasst, wobei sich der Abschnitt im Wesentlichen quer ausgehend von dem Befestigungsabschnitt (18), bevorzugt ausgehend von einer unteren Zone des Befestigungsabschnitts erstreckt.

7. Kraftfahrzeugtür (2), die Folgendes umfasst:
- eine Außenplatte (4) mit einem oberen Rand (6);
- einen oberen Rahmen (8) mit einer Befestigungsplatte (12) an einer vorderen Zone (10) des Rahmens;
- einen Sockel (14) eines Außenrückspiegels, der an der Befestigungsplatte (12) befestigt ist;
**dadurch gekennzeichnet, dass**
der Rückspiegelsockel (14) nach einem der Ansprüche 1 bis 6 beschaffen ist, wobei sich der oder die Haken (24') an den oberen Rand (6) anlegt (anlegen).

8. Tür (2) nach Anspruch 7, **dadurch gekennzeichnet, dass** der oder die Haken (24') von dem oberen Rand (6) beabstandet ist (sind), wenn der Befestigungsabschnitt (18) des Sockels endgültig an der Befestigungsplatte (12) befestigt ist.

9. Tür (2) nach Anspruch 8, **dadurch gekennzeichnet, dass** der Befestigungsabschnitt (18) Aufnahmeschäfte (32) von Befestigungsschrauben, die die Befestigungsplatte (12) durchqueren, umfasst.

## Claims

1. A baseplate (14) of an exterior mirror (16) for an automobile door (2), including
- a portion (18) for attachment against a generally vertical plate (12) of the door;
- means for provisional attachment of the attachment portion (18) on the door, including first provisional attachment means (24) situated at an upper region (26) of said baseplate;
**characterized in that** the provisional attachment means include, furthermore, at least one elastically deformable hook (24') situated at a lower edge (26') of said baseplate and directed downwards so as to be able to engage with an upper edge (6) of an exterior panel (4) of the door (2), by a movement of engagement of the first means (24) followed by a pivoting movement of the baseplate (14) for the purpose of engaging said hook.

2. The baseplate (14) according to claim 1, **characterized in that** the first provisional attachment means (24) are configured to cooperate with an upper pillar (28) of frame (8) of the door.

3. The baseplate (14) according to claim 2, **characterized in that** the first provisional attachment means form a tab (24) extending longitudinally along the upper edge (26) of the attachment portion (18).

4. The baseplate (14) according to one of claims 1 to 3, **characterized in that** the baseplate includes a body (30) extending in the attachment portion (18) with final attachment means (32), in particular by screwing, the hook or hooks (24') being embodied in one piece with said body (30).

5. The baseplate (14) according to claim 4, **characterized in that** it includes a cover (22) covering the body (30) at least over the attachment portion (18), the first provisional attachment means (24) being embodied in one piece with said cover.

6. The baseplate (14) according to one of claims 1 to 5, **characterized in that** it includes a support portion (20) of the mirror, said portion extending essentially transversely from the attachment portion (18), preferably for a lower region of said attachment portion.

7. An automobile door (2), including:
- an exterior panel (4) with an upper edge (6);
- an upper window frame (8) with, at a front region (10) of said frame, an attachment plate (12);
- a baseplate (14) of an exterior mirror, attached to the attachment plate (12);
**characterized in that**
the baseplate (14) of the mirror is according to one of claims 1 to 6, the hook or hooks (24') fitting the upper edge (6).

8. The door (2) according to claim 7, **characterized in that** the hook or hooks (24') are at a distance from the upper edge (6) when the attachment portion (18) of the baseplate is attached in a final manner to the attachment plate (12).

9. The door (2) according to claim 8, **characterized in that** the attachment portion (18) includes receiving shafts (32) for attachment screws passing through the attachment plate (12).
